# EUROPEAN PATENT SPECIFICATION

(11) **EP 3 268 296 B1**
(45) Date of publication and mention of the grant of the patent: **15.08.2018**
(21) Application number: 16722410.4
(22) Date of filing: 11.03.2016
(51) Int. Cl.: B63B 27/28, F16L 11/18, B65G 11/14, E02D 15/10, F16L 1/12, F16L 1/15

(54) **MARINE FALL PIPE SYSTEM, AND MARINE VESSEL COMPRISING SUCH FALL PIPE SYSTEM**
UNTERWASSERFALLROHRSYSTEM UND WASSERFAHRZEUG MIT SOLCH EINEM FALLROHRSYSTEM
SYSTÈME DE TUYAU DE DESCENTE MARIN, ET NAVIRE COMPRENANT UN TEL SYSTÈME DE TUYAU DE DESCENTE

(30) Priority: 11.03.2015 NL 2014435
(43) Date of publication of application: 17.01.2018
(73) Proprietor: Van Oord Dredging And Marine Contractors B.V., 3063 NH Rotterdam (NL)
(72) Inventor: HAAG, Vincent Mark Izaak, 2595 EN Den Haag (NL); VAN HEUSDEN, Stefan Philippus, 2953 CT Alblasserdam (NL); KERKHOFS, Robert Cornelus Wilhelmus, 2902 AR Capelle aan den IJssel (NL)
(74) Representative: Nederlandsch Octrooibureau
(86) International application number: PCT/NL2016/050174
(87) International publication number: WO 2016/144176

(56) References cited:
- EP-A1- 0 450 675
- WO-A1-2012/008829
- WO-A1-2014/098576
- US-A1- 2004 141 811

## Description

### FIELD OF THE INVENTION

The invention relates to a marine fall pipe system for placing blocks of stone and/or rock on a sea bed and configured for suspension from a marine vessel. The fall pipe system comprises substantially tubular fall pipe segments configurable to provide a fall pipe section of fall pipe segments.

### BACKGROUND OF THE INVENTION

Fall pipe systems that are used for placing rock on a sea bed are known. They are generally installed on a dedicated vessel used for marine rock placement purposes. Rock is, for instance, to be placed for protecting and fixing pipelines on the sea bed. Such pipelines are, for instance, used for transporting crude oil from off-shore oil production fields to the main land, for transporting natural gas over the sea bed between countries, and the like. Subsea rock placement is also carried out for sea bed leveling to allow sea bed supported placement of pipe lines, the correct placement of off-shore oil production platform and off-shore windmills, and the like.

The fall pipe systems are employed to depths of several hundreds of meters. However, such lengthy fall pipe system become quite heavy providing an extensive static weight and load on the fall pipe itself, but also on the carrying vessel. In addition to a static load the fall pipe will experience large dynamic loads due to the rock dumping through the fall pipe and heavy motion of fall pipe and marine vessel To withstand such dynamic and static loads, the fall pipe should be made strong enough, which may further add to the weight of the fall pipe. These limitations restrict the use of known fall pipe systems to about 1,000 meters.

Marine fall pipe systems are, for instance, disclosed in EP 0 450 675 A1, WO 2009/020385 A1, WO 2010/147460 A1 and EP 2 266 873 A1. Document WO 2012/008829 A1 is considered as the closest prior art and discloses the preamble of claim 1.

There is a strong demand to employ fall pipe systems at larger depths. Off-shore oil productions platforms are, for instance, being planned for locations at water depths beyond 1,000 meters. A conventional fall pipe system suspended from its upper end is limited in its operating depth due to material and design limitations for the load bearing capacity of the various components, for instance, at the hang-off point. An obvious solution would be to increase capacity of load bearing members to increase operating depth. However, properties of suitable materials for the purpose have their limits. Dimensions of such members might be increased, but this will in turn add to the static weight of the fall pipe and is therefore disadvantageous.

### SUMMARY OF THE INVENTION

It is an objective of the invention to provide a marine fall pipe system that can be employed at large depths, for instance over 1,000 meter.

It is another or alternative objective of the invention to provide a marine fall pipe system that can withstand dynamic loads.

It is yet another or alternative objective of the invention to provide a marine fall pipe system that is flexible.

It is yet another or alternative objective of the invention to provide a marine fall pipe system that proves to be easy and efficient in use.

It is yet another or alternative objective to provide a marine fall pipe system that employs conventional configurations and components.

At least one of the above objectives is achieved by a marine fall pipe system (100) for placing blocks of stone and/or rock on a sea bed and configured for suspension from a marine vessel, the fall pipe system comprising
- substantially tubular fall pipe segments configurable to provide at least first and second fall pipe sections of fall pipe segments; and
- a suspension module configured to be suspended from the marine vessel and configured for suspending the second fall pipe section of fall pipe segments from the suspension module so as to continue the first fall pipe section of fall pipe segments, such that the first fall pipe section and the suspension module with the second fall pipe section are independently suspended from the marine vessel.

The suspension module allows to distribute the weight of the fall pipe system over two suspensions, while also providing ease of use of the system. Independently suspended is intended to mean that the first fall pipe section is not suspended via the suspension module with second fall pipe section or vice versa.

In an embodiment the first fall pipe section is configured to be suspended from the marine vessel.

In an embodiment the suspension module comprises an opening allowing passage there through of fall pipe segments when lowering fall pipe segments to below the suspension module to provide the second fall pipe section of fall pipe segments, which allows suspension of the second fall pipe section below the suspension module. The opening may have any shape, including a horse-shoe type of shape. Preferably, the opening is positioned centrally in the suspension module.

In an embodiment the suspension module is configured for suspension by at least one longitudinal suspension element from the vessel as an efficient means for suspending the suspension module. In an embodiment the longitudinal suspension element comprises at least one of a chain, a cable and a wire. Two or more cables, wires or chains allow a weight distribution of suspension module and second fall pipe section.

In an embodiment the suspension module is configured to receive and/or hold a top segment of the second fall pipe section of fall pipe segments, which allows holding the top side of the second fall pipe section in a well-determined position with respect to the suspension module for alignment with the first fall pipe section.

In an embodiment the suspension module is configured to receive and/or hold a bottom segment of the first fall pipe section of fall pipe segments, which allows holding the bottom side of the first fall pipe section in a well-determined position with respect to the suspension module for alignment with respect to the second fall pipe section.

In an embodiment the suspension module is configured to allow shifting sideward at least one of a bottom segment of the first fall pipe section and a top segment of the second fall pipe section such that any material passing through the first fall pipe section is not discharged into the second fall pipe section. This allows the first and second fall pipe sections to be shifted with respect to one another so that material passing through the first section can be discharged alongside the section, which is advantageous when a blockage occurs in the second section.

In another embodiment wherein the suspension module is configured to allow shifting sideward and lifting the bottom segment of the first fall pipe section. This allows shifting of first and second sections with respect to one another when the bottom end of the bottom segment of the first section projects into the top end of the top segment of the second section.

In yet another embodiment the suspension module comprises a closing arrangement configured for closing off the fall pipe system. This allows closing off the fall pipe system when a blockage occurs in the fall pipe section below the closing arrangement. Additional load will then be added to the suspension module instead of to the fall pipe. The suspension module can be provided with a larger load carrying capacity then the fall pipe, so this will prevent damage to the fall pipe system in case of a blockage.

In an embodiment the closing arrangement is configured for closing off the fall pipe system in between the first and second fall pipe sections.

In an advantageous embodiment the closing arrangement comprises a closing plate configured and arranged to be provided in between two fall pipe segments. A closing plate can be efficiently provided on the suspension module and takes limited space.

In an embodiment the suspension module comprises a segment holding arrangement configured for holding the bottom segment of the first fall pipe section to provide a well-defined position of the bottom segment and/or to allow movement of the bottom segment of the first section.

In an embodiment the fall pipe segments comprise bottomless buckets configurable to provide a fall pipe section of bottomless buckets attached to and suspended from a suspension set of at least one longitudinal suspension element, such that an open bottom side of a bucket above a bottom bucket of the fall pipe section opens into an open top side of an adjacent bucket there below, and an open top side of a bucket below a top bucket of the fall pipe section receives an open bottom side of an adjacent bucket there above. The bottomless buckets are advantageous in assembling and disassembling the fall pipe system, in storing the buckets and also to provide flexibility to the fall pipe system. In an embodiment the longitudinal suspension elements comprise at least one chain, cable or wire.

In an embodiment an external perimeter of a bottom side of the bottomless buckets is smaller than an internal perimeter of a top side of the bottomless buckets.

In an embodiment the buckets have a substantially conical shape.

In an embodiment the suspension set of the second section of bottomless buckets is suspended from the suspension module and/or the suspension set of the first section of bottomless buckets is suspended from the marine vessel.

In an embodiment the suspension set of the second section of bottomless buckets continues in the suspension set of the first section of bottomless buckets, and the suspension module is configured for releasably holding the suspension set. The fall pipe is then efficiently provided as a continuous string of buckets attached to the suspension set.

In an embodiment the suspension module comprises a suspension set holding arrangement configured for holding the suspension set above the top bucket of the second fall pipe section. The suspension set holding arrangement will actually bear the weight of the second fall pipe section and transfer the weight to the suspension module, and also provide a well-defined position for the top of the second fall pipe section with respect to the suspension module.

In another aspect the invention provides for a marine vessel comprising a fall pipe system according to any one of the preceding claims.

### BRIEF DESCRIPTION OF THE DRAWINGS

Further features and advantages of the invention will become apparent from the description of the invention by way of non-limiting and non-exclusive embodiments. These embodiments are not to be construed as limiting the scope of protection. The person skilled in the art will realize that other alternatives and equivalent embodiments of the invention can be conceived and reduced to practice without departing from the scope of the present invention. Embodiments of the invention will be described with reference to the accompanying drawings, in which like or same reference symbols denote like, same or corresponding parts:
Figure 1 shows part of a vessel carrying an embodiment of a fall pipe system according to the invention;
Figure 2 shows a detail of the fall pipe system of figure 1;
Figure 3a shows a suspension module according to the invention as incorporated in the fall pipe system of figure 1;
Figure 3b shows a suspension holding arrangement of the suspension module of figure 3a;
Figure 3c shows a bucket holding arrangement of the suspension module of figure 3a;
Figure 4 shows part of a vessel carrying another embodiment of a fall pipe system according to the invention;
Figure 5 shows another embodiment of a suspension module according to the invention as incorporated in the fall pipe system of figure 4; and
Figure 6 schematically shows a large-scale view of a marine vessel provided with a fall pipe system according to the invention.

### DETAILED DESCRIPTION OF EMBODIMENTS

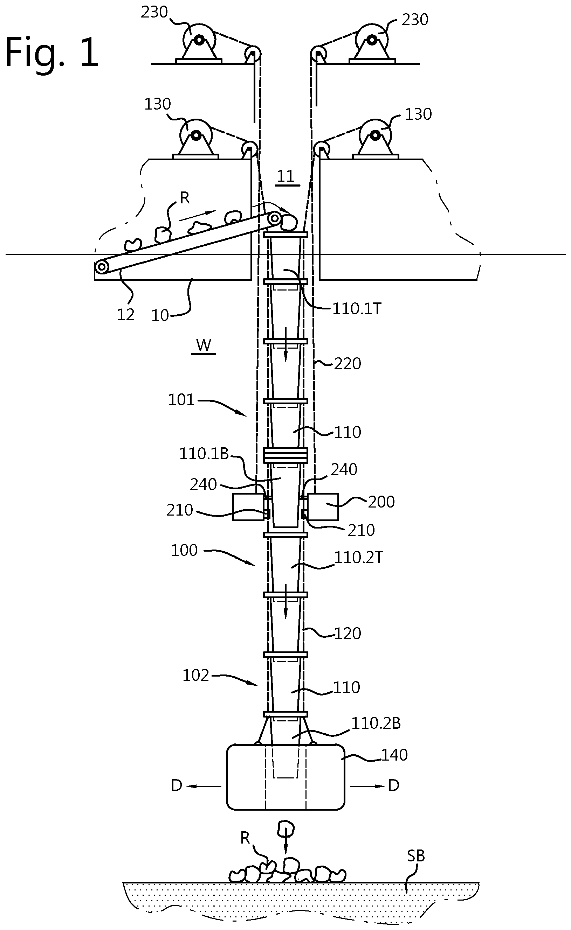

Figure 1 shows part of a marine vessel 10 on which a fall pipe system is arranged. A fall pipe 100 made up of various fall pipe segments 110 suspends down from the vessel through a shaft 11 in the vessel to a large depth just above a sea bed SB. The shaft may also be referred to as a moon pool. The fall pipe segments need not be lowered through a moon pool, but could also be lowered next to a marine vessel in an alternative embodiment. Blocks of stone and/or rock R are provided by a conveyer 12 arranged on the vessel to a top end of the fall pipe and subsequently drop down the tubular fall pipe, as indicated by unlabeled arrows shown above the conveyer and within the fall pipe. The blocks of stone and/or rock R then leave the last (bottom) fall pipe segment 110.2B of the fall pipe to be positioned on the sea bed SB.

A driver arrangement 140 may be provided at the end of the fall pipe for positioning the end of the fall pipe at the correct position of the sea bed. The driver arrangement can be coupled to a fall pipe segment or be supported by alternative means, such as a floating arrangement or additional suspension wires. The driver arrangement 140 may also be left out.

The tubular fall pipe segments 110 are connected to one another by a suspension set of longitudinal suspension elements in the form of chains, wires, or (steel) cables, 120, which also serve to lift and lower the fall pipe segments using hoisting arrangement 130 on the marine vessel 10 through shaft 11 or otherwise. Individual fall pipe segments may be added and connected to the steel cables or chains 120 at the top end of the fall pipe, as required, when the fall pipe is lowered and disconnected and removed again when the fall pipe is being lifted. Any other suitable manner of providing or storing the fall pipe segments may be employed as well, such as storing and feeding segments 110 already attached to chains 120.

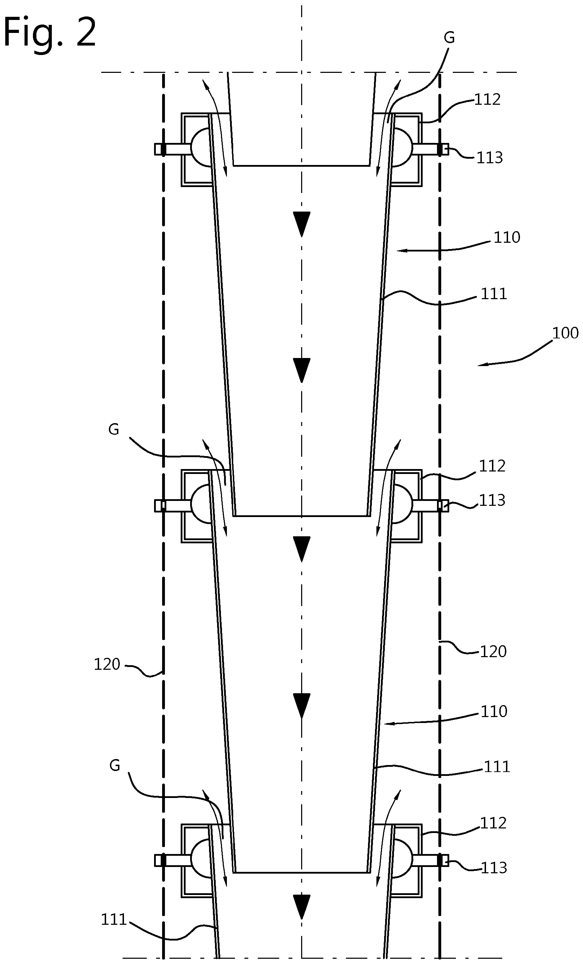

Figure 2 shows some fall pipe segments 110 with connecting chains 120 of the fall pipe in more detail. A fall pipe segment 110 comprises a substantially conical shaped bottomless bucket 111. The bottomless buckets can be made of any suitable material like, for instance, steel or a medium density grade polyethylene, such as, for instance, Rigidex HD3850UA, supplied in pellet form for use in a rotational molding process to actually manufacture the bucket. The bottomless buckets 111 are attached to the chains 120 such that a top side of one bucket 111 overlaps with a bottom side of an adjacent bottomless bucket 111. An external perimeter and cross-section of the bottom side of the buckets 111 is smaller than an internal perimeter and cross-section of the top side of the buckets such that a gap G is left open between the top side of one bucket and the bottom side of an adjacent bucket. Water may flow through the gaps G as indicated by the arrows. One bucket projects into an adjacent bucket that is neighboring there below. Such configuration guarantees a reliable transport of rock downwards, while providing a flexible fall pipe system made up from the bottomless buckets 111. The conical shape of the buckets also allows the buckets to be nested into one another for the reduction of storage space on, for instance, the vessel 10.

At their top sides the buckets have, in the embodiment shown, a collar 112 with an arrangement 113 for attachment to the (steel cable or) chain 120, which is known as such, such that the bottomless bucket suspends from the chains 120. A position of a fall pipe segment 110 is therefore fixed with respect to the chains 120 and substantially fixed with respect to adjacent fall pipe segments although it allows some movement of adjacent fall pipe segments 110 with respect to one another for providing flexibility to the fall pipe.

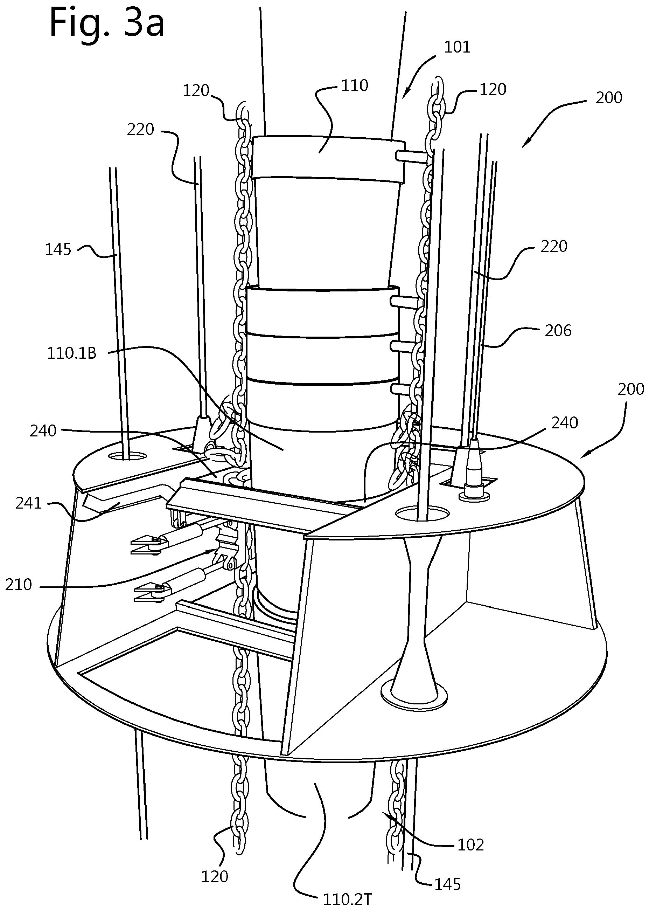

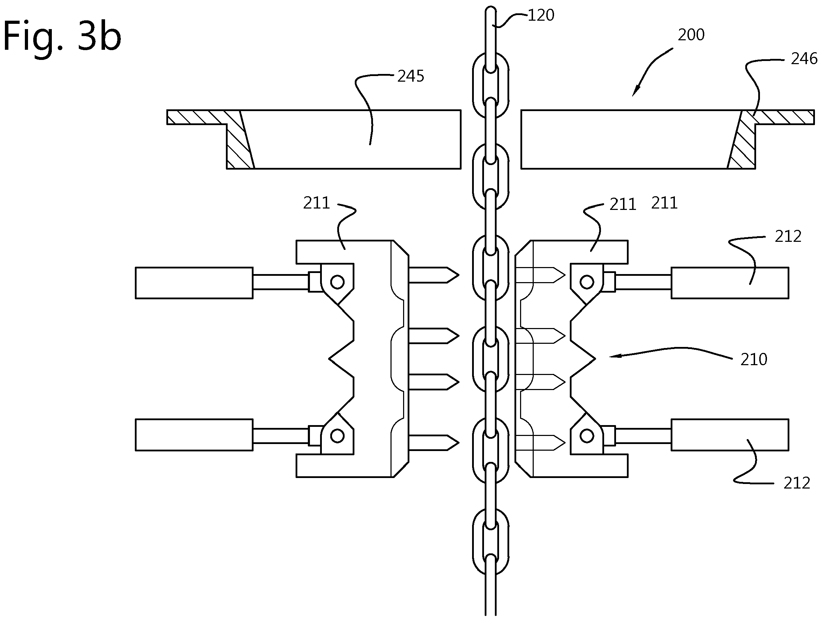

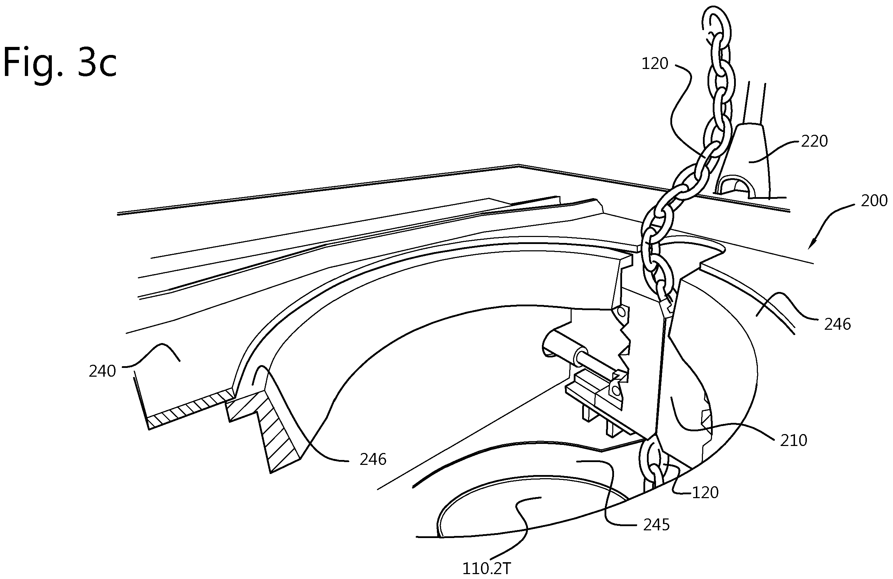

At about the middle of the fall pipe 100 a suspension module 200 is provided, which divides the fall pipe 100 in an upper or first fall pipe section 101 and a lower or second fall pipe section 102. The suspension module 200 is shown in more detail in figures 3a, 3b and 3c. It is suspended from longitudinal suspension elements in the form of cables or chains 220 and can be raised and lowered through hoisting arrangement 230 on the marine vessel 10. The hoisting arrangements 130, 230 are positioned one above the other on the vessel in the embodiment shown. The cables (or chains) 220 bear the weight of the suspension module and the lower (second) fall pipe section 102 of buckets 110. The bottomless buckets 110 of both the upper (first) and lower fall pipe sections 101, 102 are, in the embodiment disclosed, suspended from one suspension set of chains 120, the suspension set of one fall pipe section being continued in the suspension set of the other fall pipe section.

The suspension module 200 comprises a suspension set holding arrangement 210 for holding the suspension set of cables or chains 120. The holding arrangement 210 is shown in more detail in figure 3b and comprises two blocks 211 that can be driven towards one another by hydraulic cylinders 212 so as to grab and hold the chains 120 of the suspension set. The holding arrangement 210 of the embodiment disclosed is specifically suited for holding chains. Other embodiments can be envisioned as well for the holding arrangement 210 for holding chains or cables.

When the fall pipe 100 has not yet been lowered from the vessel, both the driver arrangement 140 and suspension module 200 are located on the marine vessel 10 near the top suspension point of the fall pipe. To deploy the lower fall pipe section, bottomless buckets 110 attached to the suspension set are passed through a central opening 245 in a bucket holding arrangement 240 of the suspension module 200 and lowered into the sea when further unwinding chains from the hoisting arrangement 130 and lowering the driver arrangement. A diameter of the opening 245 allows passing of buckets 110 at that moment. After some time all the buckets 110 of the lower (second) fall pipe section 102 have passed through the central opening 245 of the suspension module. The blocks 211 of the suspension set holding arrangement 210 will then close by activating the hydraulic cylinders 212 so as to grab and hold the cables or chains 120 of the suspension set just above the top bucket 110.2T of the lower fall pipe section 102. By holding the cables or chains 120 at this position the suspension module 200 holds the top bucket 110.2T and bears the weight of the lower fall pipe section 102.

Figure 3c shows a situation just after closure of blocks 211 of suspension set holding arrangement 210. Chains 120 of the suspension set of the lower fall pipe section 102 below the suspension module 200 show to be taut, whereas the chains 120 of the suspension set of the upper fall pipe section just above the suspension module show some slack due to further advancing of a next bottomless bucket. The central opening 245 of the bucket holding arrangement 240 of the suspension module is then decreased in diameter by an inward movement of two semi circularly shaped parts 246, which is again effected by hydraulic cylinders (not shown). Figure 3c shows the situation after inward movement of parts 246 to provide a central opening 245 with decreased diameter to allow holding a bottomless bucket.

Bottomless buckets 110 are subsequently further provided towards suspension module 200 to yield the top (first) fall pipe section 101. A last (bottom) bucket 110.1B of the top fall pipe section is held in reduced diameter opening 245 of the suspension module. The suspension module is lowered into the sea followed by further bottomless buckets 110 of the top fall pipe section 101. The suspension module is lowered by unwinding suspension cables 220 from hoisting arrangement 230. The weight of the upper fall pipe section 101 is born by the hoisting arrangement 130, while the weight of the suspension module and lower fall pipe section 102 is born by the hoisting arrangement 230. Holding the bottom bucket 110.1B in reduced diameter opening 245 keeps the bottom end of the top fall pipe section in place with respect to the suspension module.

Figures 1 and 3a show that three buckets 110 are nested into one another on top of the suspension module 200. This is to allow for some variation in length of the top fall pipe section 101 with respect to a distance between suspension module 200 and the vessel 10.

The bottom bottomless bucket 110.1B of the first fall pipe section 101 can be moved sideward in the suspension module 200 by a sideward movement of the bucket holding arrangement 240. Figure 3a shows a guiding groove 241 for the sideward movement of the holding module 240, which can be moved by one or more hydraulic cylinders that are not shown in the drawings. The guiding groove 246 provides for a sideward and upward movement of the holding module 240 and therefore of the bottom bucket 110.1B of the first fall pipe section. The upward and sideward movement of the bucket holding arrangement 240 allows the bottom bucket 110.1B to be moved upward and sideward with respect to the top bucket 110.2T of the second fall pipe section 102. Any material passing through the top fall pipe section 101 is then not discharged into the bottom fall pipe section 102, which is advantageous in case there is a blockage in the lower fall pipe section. The material passing through the upper fall pipe section 101 is directly discharged into the sea. No additional weight is then added to the fall pipe 100. A blockage may be detected by appropriate sensors for chain load measurement, for instance, added to the hoisting systems 130, 230, or by other suitable sensors fitted to the fall pipe for this purpose.

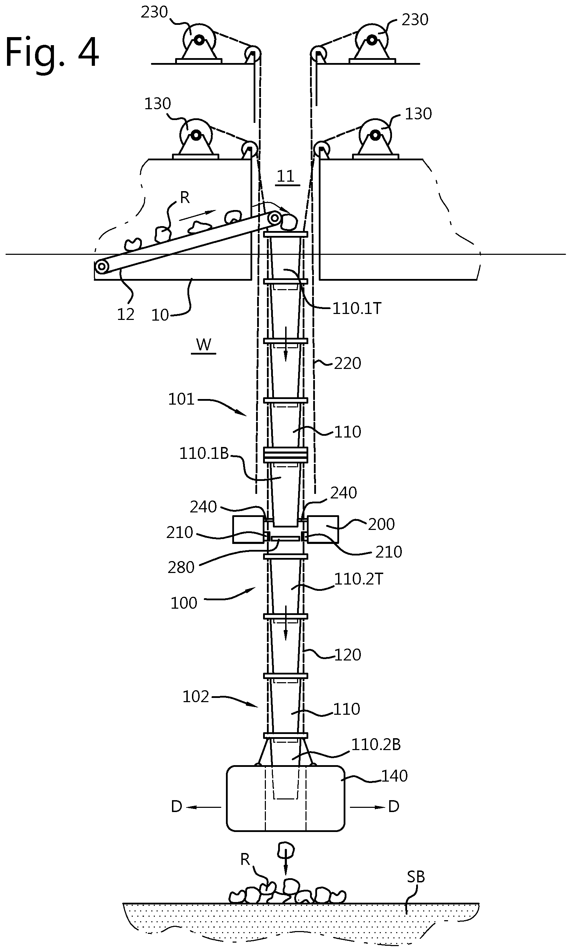

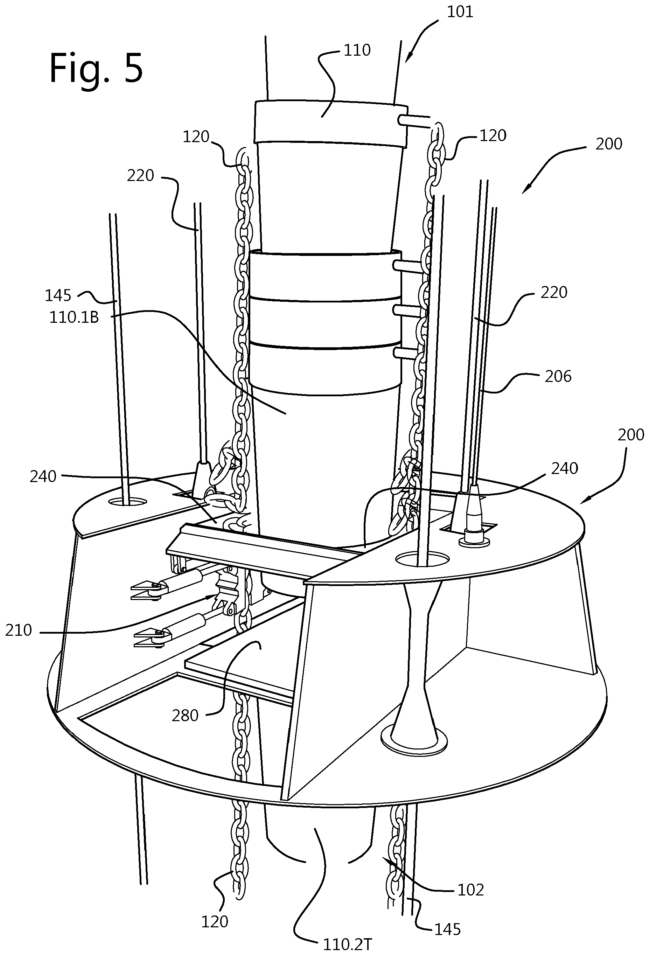

Figures 4 and 5 show another embodiment of the suspension module 200, which comprises a closing arrangement for closing off the fall pipe system. The closing arrangement comprises a closing plate 280 that can be slid in between the first fall pipe section 101 and the second fall pipe section 102, which is in between bottom bucket 110.1B of the first fall pipe section and top bucket 110,2T of the second fall pipe section. The closing plate 280 is, in the embodiment shown, driven by hydraulic cylinders, which are not visible in figures 4 and 5. However, any other suitable means to drive the closing plate can be used as well. The closing arrangement can be closed when a blockage occurs in the second fall pipe section. Additional rocks provided through the fall pipe will then not add additional load to the blockage when the closing arrangement is closed. Load will be added to the suspension module on top off the closing plate 280. In yet another embodiment both the arrangement for sideward movement of a fall pipe section as described with reference to figure 3a and the closing arrangement 280 are provided.

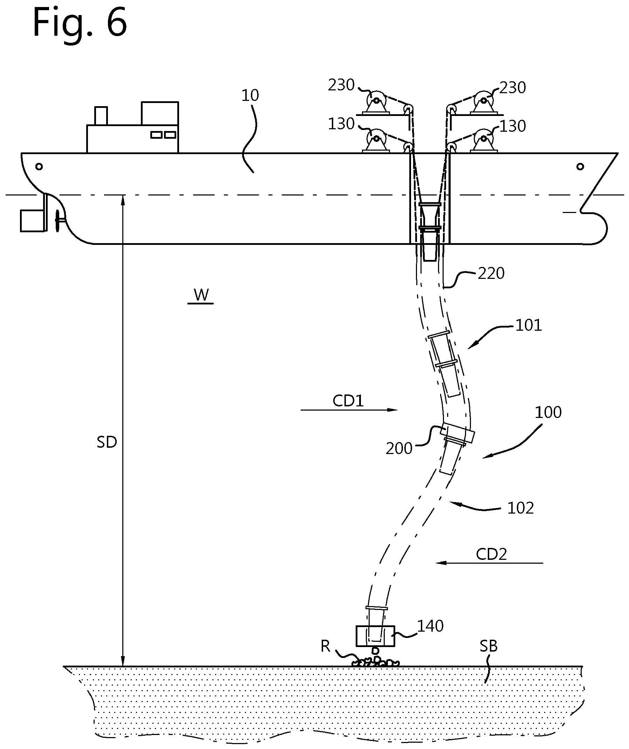

Figure 6 shows a schematic large-scale view of a marine vessel 10 provided with a fall pipe system 100 according to the invention. The vessel is travelled to a location where stone and/or rock is to be placed on the bottom of the sea. The stone and/or rock may be taken with the vessel, provided by another vessel or supplied in another suitable manner. At the desired location the stone or rock is provided to the sea bed using the fall pipe system. The blocks of stone and/or rock R are placed at a sea depth SD of about 1,500 meter in the example shown, at which depth the fall pipe system according to the invention can be employed whereas known system provide too large static loads to be used at such depths. Figure 4 also shows the influence of dynamic loads due to, for instance, water currents. The example of figure 4 shows one current closer to sea level in a direction CD1 and another water current near to the sea bed SB in an opposite direction CD2. Such water currents may pose horizontal loads on the fall pipe system, which can be handled by the fall pipe system as disclosed.

An embodiment of the invention has been disclosed with one specific type of fall pipe and fall pipe segments. The invention may be employed with other types of fall pipes and fall pipe segments as well. Various other embodiments of the invention will be apparent to the skilled person when having read the above disclosure in connection with the drawing, all of which as within the scope of the invention and accompanying claims.

## Claims

1. A marine fall pipe system (100) for placing blocks of stone and/or rock (R) on a sea bed (SB) and configured for suspension from a marine vessel (10), the fall pipe system comprising
- substantially tubularfall pipe segments (110) configurable to provide at least first and second fall pipe sections (101, 102) of fall pipe segments; **characterized by**
- a suspension module (200) configured to be suspended from the marine vessel and configured for suspending the second fall pipe section (102) of fall pipe segments from the suspension module so as to continue the first fall pipe section (101) of fall pipe segments, such that the first fall pipe section (101) and the suspension module (200) with the second fall pipe section (102) are independently suspended from the marine vessel (10).

2. The fall pipe system according to the preceding claim, wherein the first fall pipe section (101) is configured to be suspended from the marine vessel (10).

3. The fall pipe system according to claim 1 or 2, wherein the suspension module (200) comprises an opening (245) allowing passage there through of fall pipe segments (110) when lowering fall pipe segments to below the suspension module to provide the second fall pipe section (102) of fall pipe segments,
optionally the opening (246) being positioned centrally in the suspension module (200).

4. The fall pipe system according to any one of the preceding claims, wherein the suspension module (200) is configured for suspension by at least one longitudinal suspension element (220) from the vessel (10), in an embodiment the longitudinal suspension element comprises at least one of a chain, a cable (220) and a wire.

5. The fall pipe system according to any one of the preceding claims, wherein the suspension module (200) is configured to receive and/or hold a top segment (110.2T) of the second fall pipe section (102) of fall pipe segments (110).

6. The fall pipe system according to any one of the preceding claims, wherein the suspension module (200) is configured to receive and/or hold a bottom segment (110.1B) of the first fall pipe section (101) of fall pipe segments (110).

7. The fall pipe system according to any one of the preceding claims, wherein the suspension module (200) is configured to allow shifting sideward at least one of a bottom segment (110.1B)) of the first fall pipe section (101) and a top segment (110.2T) of the second fall pipe section (102) such that any material passing through the first fall pipe section (101) is not discharged into the second fall pipe section (102).

8. The fall pipe system according to any one of the preceding claims, wherein the suspension module (200) is configured to allow shifting sideward and lifting the bottom segment (110.1B) of the first fall pipe section (101).

9. The fall pipe system according to any one of the preceding claims, wherein the suspension module (200) comprises a closing arrangement (280) configured for closing off the fall pipe system,
optionally the closing arrangement (280) being configured for closing off the fall pipe system in between the first and second fall pipe sections (101, 102),
optionally the closing arrangement comprising a closing plate (280) configured and arranged to be provided in between two fall pipe segments (110).

10. The fall pipe system according to any one of claims 7-9, wherein the suspension module (200) comprises a segment holding arrangement (240) configured for holding the bottom segment (110.1B) of the first fall pipe section (101).

11. The fall pipe system according to any one of the preceding claims, wherein the fall pipe segments comprise bottomless buckets (110) configurable to provide a fall pipe section (101, 102) of bottomless buckets attached to and suspended from a suspension set of at least one longitudinal suspension element (120), such that an open bottom side of a bucket above a bottom bucket (110.1B, 110.2B) of the fall pipe section opens into an open top side of an adjacent bucket there below, and an open top side of a bucket below a top bucket (110.1T, 110.2T) of the fall pipe section receives an open bottom side of an adjacent bucket there above, in an embodiment the longitudinal suspension element comprising at least one of a chain (120), a cable and a wire,
optionally an external perimeter of a bottom side of the bottomless buckets (110) being smaller than an internal perimeter of a top side of the bottomless buckets,
optionally the buckets (110) having a substantially conical shape.

12. The fall pipe system according to the preceding claim, wherein the suspension set of the second section (102) of bottomless buckets is suspended from the suspension module (200) and/or the suspension set of the first section (101) of bottomless buckets is suspended from the marine vessel (10).

13. The fall pipe system according to claim 11 or 12, wherein the suspension set of the second section (102) of bottomless buckets continues in the suspension set of the first section (101) of bottomless buckets, and the suspension module (200) is configured for releasably holding the suspension set.

14. The fall pipe system according to any one of claims 11 - 13, wherein the suspension module (200) comprises a suspension set holding arrangement(210) configured for holding the suspension set above the top bucket (110.2T) of the second fall pipe section (102).

15. A marine vessel (10) comprising a fall pipe system (100) according to any one of the preceding claims.

## Patentansprüche

1. Marinefallrohrsystem (100) zum Anordnen von Stein- und/oder Felsblöcken (R) auf einem Meeresboden (SB), eingerichtet zum Aufhängen an einem Wasserfahrzeug, wobei das Fallrohrsystem umfasst
- im Wesentlichen rohrförmige Fallrohrsegmente (110), die einrichtbar sind, um mindestens einen ersten und einen zweiten Fallrohrabschnitt (101, 102) aus Fallrohrsegmenten bereitzustellen; **gekennzeichnet durch**
- ein Aufhängungsmodul (200), das eingerichtet ist, an dem Wasserfahrzeug aufgehängt zu werden und eingerichtet ist, den zweiten Fallrohrabschnitt (102) aus Fallrohrsegmenten an dem Aufhängungsmodul aufzuhängen, um den ersten Fallrohrabschnitt (101) aus Fallrohrsegmenten fortzusetzen, sodass der erste Fallrohrabschnitt (101) und das Aufhängungsmodul (200) mit dem zweiten Fallrohrabschnitt (102) unabhängig voneinander am Wasserfahrzeug (10) aufgehängt sind.

2. Fallrohrsystem nach dem vorhergehenden Anspruch, wobei der erste Fallrohrabschnitt (101) eingerichtet ist, am Wasserfahrzeug (10) aufgehängt zu werden.

3. Fallrohrsystem nach Anspruch 1 oder 2, wobei das Aufhängungsmodul (200) eine Öffnung (245) aufweist, die den Durchtritt von Fallrohrsegmenten (110) beim Absenken von Fallrohrsegmenten unter das Aufhängungsmodul ermöglicht, um den zweiten Fallrohrabschnitt (102) aus Fallrohrsegmenten bereitzustellen,
wobei die Öffnung (246) optional mittig im Aufhängungsmodul (200) angeordnet ist.

4. Fallrohrsystem nach einem der vorhergehenden Ansprüche, wobei das Aufhängungsmodul (200) eingerichtet ist, durch mindestens ein Längsaufhängungselement (220) am Fahrzeug (10) aufgehängt zu werden, wobei gemäß einem Ausführungsbeispiel das Längsaufhängungselement mindestens eines von einer Kette, einem Seil (220) und einem Draht umfasst.

5. Fallrohrsystem nach einem der vorhergehenden Ansprüche, wobei das Aufhängungsmodul (200) eingerichtet ist, ein Oberteilsegment (110.2T) des zweiten Fallrohrabschnitts (10) aus Fallrohrsegmenten (110) aufzunehmen und/oder zu halten.

6. Fallrohrsystem nach einem der vorhergehenden Ansprüche, wobei das Aufhängungsmodul (200) eingerichtet ist, ein Bodensegment (110.1B) des ersten Fallrohrabschnitts (101) aus Fallrohrsegmenten (110) aufzunehmen und/oder zu halten.

7. Fallrohrsystem nach einem der vorhergehenden Ansprüche, wobei das Aufhängungsmodul (200) eingerichtet ist, dass es ein seitliches Verschieben mindestens eines von einem Bodensegment (110.1B) des ersten Fallrohrabschnitts (101) und einem Oberteilsegment (110.2T) des zweiten Fallrohrabschnitts (102) ermöglicht, sodass jegliches Material, das durch den ersten Fallrohrabschnitt (101) läuft, nicht in den zweiten Fallrohrabschnitt (102) abgeführt wird.

8. Fallrohrsystem nach einem der vorhergehenden Ansprüche, wobei das Aufhängungsmodul (200) eingerichtet ist, ein seitliches Verschieben und Anheben des Bodensegments (110.1B) des ersten Fallrohrabschnitts (101) zu ermöglichen.

9. Fallrohrsystem nach einem der vorhergehenden Ansprüche, wobei das Aufhängungsmodul (200) eine Schließvorrichtung (280) aufweist, die eingerichtet ist, das Fallrohrsystem zu schließen,
wobei optional die Schließvorrichtung eingerichtet ist, das Fallrohrsystem zwischen dem ersten und dem zweiten Fallrohrabschnitt (101, 102) abzuschließen,
wobei optional die Schließvorrichtung eine Schließplatte (280) umfasst, die eingerichtet und angeordnet ist, zwischen zwei Fallrohrsegmenten (110) bereitgestellt zu werden.

10. Fallrohrsystem nach einem der Ansprüche 7 bis 9, wobei das Aufhängungsmodul (200) eine Segmenthalteanordnung (240) umfasst, die eingerichtet ist, das Bodensegment (110.1B) des ersten Fallrohrabschnitts (101) zu halten.

11. Fallrohrsystem nach einem der vorhergehenden Ansprüche, wobei die Fallrohrsegmente bodenlose Behälter (110) umfassen, die einrichtbar sind, einen Fallrohrabschnitt (101, 102) aus bodenlosen Behältern befestigt an und aufgehängt durch einen Aufhängungssatz aus mindestens einem Längsaufhängungselement (120) bereitzustellen, sodass sich eine offene Bodenseite eines Behälters über einem bodenseitigen Behälter (110.1B, 110.2B) des Fallrohrabschnitts in eine offene Oberseite eines angrenzenden Behälters darunter öffnet und eine offene Oberseite eines Behälters unter einem oberen Behälter (110.1T, 110.2T) des Fallrohrabschnitts eine offene Bodenseite eines angrenzenden Behälters darüber empfängt, wobei gemäß einem Ausführungsbeispiel das Längsaufhängungselement mindestens eines umfasst von einer Kette (120), einem Seil und einem Draht,
wobei optional ein Außenumfang der Bodenseite eines bodenlosen Behälters (110) kleiner als ein Innenumfang der Oberseite des bodenlosen Behälters ist,
wobei optional die Behälter (110) eine im Wesentlichen konische Form aufweisen.

12. Fallrohrsystem nach einem der vorhergehenden Ansprüche, wobei der Aufhängungssatz des zweiten Abschnitts (102) von bodenlosen Behältern an dem Aufhängungsmodul (200) aufgehängt ist und/oder der Aufhängungssatz des ersten Abschnitts (101) von bodenlosen Behältern an dem Wasserfahrzeug (10) aufgehängt ist.

13. Fallrohrsystem nach einem der Ansprüche 11 oder 12, wobei der Aufhängungssatz des zweiten Abschnitts (102) von bodenlosen Behältern sich in dem Aufhängungssatz des ersten Abschnitts (101) von bodenlosen Behältern fortsetzt und das Aufhängungsmodul (200) eingerichtet ist, den Aufhängungssatz lösbar zu halten.

14. Fallrohrsystem nach einem der Ansprüche 11 bis 13, wobei das Aufhängungsmodul (200) eine Aufhängungssatzhaltevorrichtung (210) umfasst, die eingerichtet ist, den Aufhängungssatz über dem oberen Behälter (110.2T) des zweiten Fallrohrabschnitts (102) zu halten.

15. Wasserfahrzeug (10) umfassend ein Fallrohrsystem (100) nach einem der vorhergehenden Ansprüche.

## Revendications

1. Système de tuyau de descente marin (100) pour placer des blocs de pierre et/ou rocher (R) sur un lit marin (SB) et configuré pour être suspendu à un navire (10), le système de tuyau de descente comprenant :
des segments de tuyau de descente (110) sensiblement tubulaires pouvant être configurés pour fournir au moins des première et seconde sections de tuyau de descente (101, 102) des segments de tuyau de descente ; **caractérisé par** :
un module de suspension (200) configuré pour être suspendu au navire et configuré pour suspendre la seconde section de tuyau de descente (102) des segments de tuyau de descente au module de suspension afin de continuer la première section de tuyau de descente (101) des segments de tuyau de descente, de sorte que la première section de tuyau de descente (101) et le module de suspension (200) avec la seconde section de tuyau de descente (102) sont suspendus indépendamment au navire (10).

2. Système de tuyau de descente selon la revendication précédente, dans lequel la première section de tuyau de descente (101) est configurée pour être suspendue au navire (10).

3. Système de tuyau de descente selon la revendication 1 ou 2, dans lequel le module de suspension (200) comprend une ouverture (245) permettant le passage à travers cette dernière des segments de tuyau de descente (110) lors de l'abaissement des segments de tuyau de descente au-dessous du module de suspension pour fournir la seconde section de tuyau de descente (102) des segments de tuyau de descente,
facultativement l'ouverture (246) étant positionnée de manière centrale dans le module de suspension (200).

4. Système de tuyau de descente selon l'une quelconque des revendications précédentes, dans lequel le module de suspension (200) est configuré pour être suspendu par au moins un élément de suspension longitudinal (220) au navire (10), dans un mode de réalisation, l'élément de suspension longitudinal comprend au moins l'un parmi une chaîne, un câble (220) et un fil.

5. Système de tuyau de descente selon l'une quelconque des revendications précédentes, dans lequel le module de suspension (200) est configuré pour recevoir et/ou maintenir un segment supérieur (110.2T) de la seconde section de tuyau de descente (102) des segments de tuyau de descente (110).

6. Système de tuyau de descente selon l'une quelconque des revendications précédentes, dans lequel le module de suspension (200) est configuré pour recevoir et/ou maintenir un segment inférieur (110.1B) de la première section de tuyau de descente (101) des segments de tuyau de descente (110).

7. Système de tuyau de descente selon l'une quelconque des revendications précédentes, dans lequel le module de suspension (200) est configuré pour permettre le déplacement latéral d'au moins l'un parmi un segment inférieur (110.1B) de la première section de tuyau de descente (101) et un segment supérieur (110.2T) de la seconde section de tuyau de descente (102) de sorte que tout matériau passant par la première section de tuyau de descente (101) n'est pas déchargé dans la seconde section de tuyau de descente (102).

8. Système de tuyau de descente selon l'une quelconque des revendications précédentes, dans lequel le module de suspension (200) est configuré pour permettre le déplacement latéral et le levage du segment inférieur (110.1B) de la première section de tuyau de descente (101).

9. Système de tuyau de descente selon l'une quelconque des revendications précédentes, dans lequel le module de suspension (200) comprend un agencement de fermeture (280) configuré pour fermer le système de tuyau de descente,
facultativement l'agencement de fermeture (280) étant configuré pour fermer le système de tuyau de descente entre les première et seconde sections de tuyau de descente (101, 102),
facultativement l'agencement de fermeture comprenant une plaque de fermeture (280) configurée et agencée pour être prévue entre deux segments de tuyau de descente (110).

10. Système de tuyau de descente selon l'une quelconque des revendications 7 à 9, dans lequel le module de suspension (200) comprend un agencement de maintien de segment (240) configuré pour maintenir le segment inférieur (110.1B) de la première section de tuyau de descente (101).

11. Système de tuyau de descente selon l'une quelconque des revendications précédentes, dans lequel les segments de tuyau de descente comprennent des godets sans fond (110) pouvant être configurés pour fournir une section de tuyau de descente (101, 102) des godets sans fond fixés à et suspendus à un ensemble de suspension d'au moins un élément de suspension longitudinal (120), de sorte qu'un côté inférieur ouvert d'un godet au-dessus d'un godet inférieur (110.1B, 110.2B) de la section de tuyau de descente s'ouvre dans un côté supérieur ouvert d'un godet adjacent au-dessous, et un côté supérieur ouvert d'un godet au-dessous d'un godet supérieur (110.1T, 110.2T) de la section de tuyau de descente reçoit un côté à fond ouvert d'un godet adjacent au-dessus, dans un mode de réalisation, l'élément de suspension longitudinal comprenant au moins l'un parmi une chaîne (120), un câble et un fil,
facultativement, un périmètre externe d'un côté inférieur des godets sans fond (110) étant inférieur à un périmètre interne d'un côté supérieur des godets sans fond,
facultativement les godets (110) ayant une forme sensiblement conique.

12. Système de tuyau de descente selon la revendication précédente, dans lequel l'ensemble de suspension de la seconde section (102) des godets sans fond est suspendu au module de suspension (200) et/ou l'ensemble de suspension de la première section (101) des godets sans fond est suspendu au navire (10).

13. Système de tuyau de descente selon la revendication 11 ou 12, dans lequel l'ensemble de suspension de la seconde section (102) des godets sans fond continue dans l'ensemble de suspension de la première section (101) des godets sans fond, et le module de suspension (200) est configuré pour maintenir, de manière amovible, l'ensemble de suspension.

14. Système de tuyau de descente selon l'une quelconque des revendications 11 à 13, dans lequel le module de suspension (200) comprend un agencement de support d'ensemble de suspension (210) configuré pour maintenir l'ensemble de suspension au-dessus du godet supérieur (110.2T) de la seconde section de tuyau de descente (102).

15. Navire (10) comprenant un système de tuyau de descente (100) selon l'une quelconque des revendications précédentes.
